(19) Europäisches Patentamt
European Patent Office
Office européen des brevets

(11) **EP 4 703 998 A1**

## (12) EUROPEAN PATENT APPLICATION

(43) Date of publication:
**04.03.2026  Bulletin 2026/10**

(21) Application number: **24197696.8**

(22) Date of filing: **30.08.2024**

(51) International Patent Classification (IPC):
**G06Q 10/0875** (2023.01)   **G06F 40/00** (2020.01)
**G06N 3/092** (2023.01)

(52) Cooperative Patent Classification (CPC):
**G06Q 10/0875; G06N 3/045; G06N 3/092;**
**G06Q 10/0637; G06Q 10/06393;** G06F 40/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventor: **The designation of the inventor has not yet been filed**

(74) Representative: **Siemens Patent Attorneys**
**Postfach 22 16 34**
**80506 München (DE)**

(54) **METHOD AND SYSTEM FOR GENERATING A BILL OF MATERIALS AND A CORRESPONDING BILL OF PROCESSES FOR A PRODUCT**

(57)   For generating a bill of materials and a corresponding bill of processes for a product, a natural language processing module (NLP-M) maps at least one document specifying a product into a latent representation (LR), which is an embedding in latent space. A bill of materials generator (BOM-G) receives the latent representation (LR) as input and generates a bill of materials (BOM-TR) for the product. A user interface (UI) detects user interactions with the generated bill of materials (BOM-TR) and creates a curated bill of materials (BOM-C) depending on the user interactions. A bill of processes generator (BOP-G) receives the latent representation (LR) and the curated bill of materials (BOM-C) as input and constructs a bill of processes (BOP-DAG) for the product. The method and system, or at least some of their embodiments, provide semiautomatic generation of the bill of materials and bill of processes for a product, using an AI engine. Compared to manually setting up a bill of materials and/or bill of processes within a software-system, the approach of using AI for generating this information can significantly speed up the process of calculating costs and sustainability values of a product. In this way the time from request for quotation until submitting the actual offer can be lowered significantly.

FIG 3

EP 4 703 998 A1

## Description

Technical Field

This application relates to generating a bill of materials and a corresponding bill of processes for a product.

Background Art

In industry, it is important to have transparency for costs and sustainability values (like carbon) of products. Typically, the transparency for costs and sustainability values is achieved by defining a bill of materials (BOM) in combination with a bill of processes (BOP) and then calculating and summing up costs and sustainability values along the BOM/BOP-structure of a product to get the total costs / carbon of the product. The BOM/BOP in that sense can be regarded as the digital twin of the product in terms of the materials and manufacturing processes required for manufacturing the product also including any direct or indirect overheads contributing to it.

The requirement of calculating costs and sustainability values already starts in the engineering and design phase of a product. While designing a new product the engineer may come across different potential ways on how to realize the product, which materials may be used, and which manufacturing processes may be required. By getting qualified information about the expected costs for different potential realizations as well as values on how the specific realizations will impact sustainability, the engineer is enabled to make design decisions in an early stage of product development. In this way products can get optimized to costs and their impact on our environment long before they enter manufacturing.

Another use case of product costing is the estimation of the product's costs and sustainability values in purchasing departments. In this area a purchasing user wants to quickly get qualified information about costs and sustainability values for purchase parts and use this information in price negotiations with potential suppliers.

Often when a purchasing user is interested in estimating costs of a product, he may not even have an already existing bill of materials available to start the calculation of costs and sustainability values. So, the purchasing user needs to create the bill of materials from scratch in the system to calculate it bottom up, so that he can use this calculation during price negotiations with suppliers.

For example, if the product assembles 200 distinct parts, the purchasing user needs to create all the 200 parts one by one in his calculation-software to manually create a digital twin of the product.

Besides the bill of materials also the bill of processes needs to be set up manually. Each single manufacturing step required for producing the product needs to be defined individually. This requires detailed knowledge of the different manufacturing techniques used in the production of that specific product.

On the other side of the purchasing price negotiations there is typically a supplier who needs to provide a detailed cost break down to his customers when replying to requests for quotation. In addition to that, the supplier also needs to ensure that specific key performance indicators about the profitability and risks associated with a project are met. In this way management can be provided with reliable data upon which they can decide if a project should get acquired or not.

For internal project-controlling, the bill of materials often is created by the R&D department during a construction and design-phase of a product in software-tools like Teamcenter NX. Nevertheless, there are still use cases in early phases of the product life cycle when a detailed bill of materials might not be available yet.

Also, for this use case the bill of processes needs to be set up in a manual way where each distinct manufacturing step needs to be defined. Setting up the manufacturing process needs to be performed by manufacturing experts and requires deep knowledge of manufacturing techniques.

The bill of materials and the bill of processes are typically set up in purpose-built software for calculating costs and sustainability values. There are several calculation-tools on the market, starting from Microsoft Excel which is widely used going to more sophisticated calculation tools such as Teamcenter Product Cost Management (TcPCM), Facton, aPriori, and others.

Typically, in any of those tools the bill of materials and the bill of processes need to be setup manually. In some cases, the bill of materials might get imported from third-party systems like Teamcenter NX or other 3D-based design software.

There are also solutions available on the market using AI models to predict the price of a product of specific manufacturing technologies like milling, drilling, and turning. Usually, these solutions require a 3D model in the form of a CAD- or JT-file and are designed specifically to certain manufacturing technologies.

Summary of Invention

It is an object of the present invention to identify a problem in the prior art and to find a technical solution for this.

The invention is defined in the independent claims. Further advantageous arrangements and embodiments of the invention are set forth in the respective dependent claims.

According to the method for generating a bill of materials and a corresponding bill of processes for a product, the following operations are performed by modules, wherein the modules are hardware modules and/or software modules executed by one or more processors:

- mapping, by a natural language processing module, at least one document specifying a product into a latent representation, which is an embedding in latent space,
- generating, by a bill of materials generator receiving the latent representation as input, a bill of materials for the product,
- outputting, by a user interface, the generated bill of materials,
- detecting, by the user interface, user interactions with the generated bill of materials and creating a curated bill of materials depending on the user interactions, and
- constructing, by a bill of processes generator receiving the latent representation and the curated bill of materials as input, a bill of processes for the product.

The system for generating a bill of materials and a corresponding bill of processes for a product comprises the following modules, wherein the modules are hardware modules and/or software modules executed by one or more processors:

- a natural language processing module, configured for mapping at least one document specifying a product into a latent representation, which is an embedding in latent space,
- a bill of materials generator, configured for receiving the latent representation as input and generating a bill of materials for the product,
- a user interface, configured for outputting the generated bill of materials, detecting user interactions with the generated bill of materials, and creating a curated bill of materials depending on the user interactions, and
- a bill of processes generator, configured for receiving the latent representation and the curated bill of materials as input and constructing a bill of processes for the product.

The following advantages and explanations are not necessarily the result of the object of the independent claims. Rather, they may be advantages and explanations that only apply to certain embodiments or variants.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, or any other communication devices that can process data with computer support, for example processors or other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk, a solid state drive or a Disk.

While the bill of materials usually is created by the design process, the bill of processes is not available at this stage of product development. Nevertheless both, the bill of materials and the bill of processes are required to calculate and estimate costs and sustainability values of the product.

The method and system, or at least some of their embodiments, can provide an engineer with qualified information about costs and sustainability values, by enhancing the bill of materials by the manufacturing processes required to manufacture and assemble the product. This is especially helpful if during product development, a product engineer has insufficient knowledge about the details of the required manufacturing processes to define them manually in a way that provides qualified results. Also, creating the bill of materials and/or bill of processes manually in a system is very time consuming and cumbersome as any information needed for getting a meaningful calculation needs to be entered manually into the system. In addition to that there is deep knowledge needed about all the manufacturing processes required to produce and assemble the product. Different user groups like product developers and engineers as well as purchasers might not have good enough knowledge in certain manufacturing technologies required to manufacture the product to create the manufacturing processes manually in their calculation-system with good enough quality.

The method and system, or at least some of their embodiments, provide semi-automatic generation of the bill of materials and bill of processes for a product, using an AI engine.

Compared to manually setting up a bill of materials and/or bill of processes within a software-system, the approach of using AI for generating this information can significantly speed up the process of calculating costs and sustainability values of a product. In this way the time from request for quotation until submitting the actual offer can be lowered significantly. In addition to that, less knowledge is required for creating a product cost- and sustainability-value-calculation for the typical user. Likewise, product engineers can get qualified information about costs and the impact on the environment for all potential realizations of a product and easily can get the information needed to decide for the optimal solution already during development.

The method and system, or at least some of their embodiments, are capable to target cost and value engineering of complex assembled parts which are not tied to one specific manufacturing technology and might assemble various parts of different manufacturing technologies.

For these more complex assembled parts predicting the price on a high level is not suitable for price negotiations between customer and supplier. For negotiating about costs and sustainability values a more granular level of detail is needed which can be provided by calculating costs on the level of the different BOM-items (parts/materials) and BOP (manufacturing steps) required for manufacturing the product.

Also, for the use case of doing design decisions already during development a simple number of the expected price of the product might not be sufficient. Having costs and sustainability values on a more granular level can help the engineer to decide for using specific materials for his design.

Description of Embodiments

In an embodiment of the method and system, the bill of processes generator has been trained to construct the bill of processes maximizing one or more key performance indicators.

An embodiment of the method and system comprises the additional operation of outputting the curated bill of materials, the bill of processes, and/or the at least one key performance indicator.

In an embodiment of the method and system, the at least one document is at least one semi-structured document or at least one free-form description in natural language.

In an embodiment of the method and system, wherein the natural language processing module contains the encoder of a transformer, a long short-term memory architecture, or a pretrained language model.

In an embodiment of the method and system, the generated bill of materials, the curated bill of materials, and the bill of processes are directed acyclic graphs.

In an embodiment of the method and system, the bill of processes generator is a reinforcement learning agent, in particular a graph convolutional policy network, that iteratively constructs the bill of processes by adding nodes and edges specifying required tasks and their dependencies.

In an embodiment of the method and system, the reinforcement learning agent has been trained with a reward based on a validity of the generated bill of processes and the at least one key performance indicator.

The computer program product comprising instructions which, when the program is executed by a computer, cause the computer to carry out the method.

The provisioning device stores and/or provides the computer program product.

Brief Description of the Drawing

The foregoing and other aspects of the present invention are best understood from the following detailed description when read in connection with the accompanying drawings. For the purpose of illustrating the invention, the drawings show embodiments that are presently preferred. However, the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:

Fig. 1    shows a first embodiment,

Fig. 2    shows another embodiment,

Fig. 3    shows an architecture of an embodiment,

Fig. 4    shows a simple example of a document D containing product specifications, a generated bill of materials BOM-TR corresponding to the document D and, for illustration only, an excerpt of a corresponding generated bill of processes BOP-DAG,

Fig. 5    shows a flowchart of a possible exemplary embodiment.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described modules can each be hardware modules or software modules. For example, a software module can be a software library; an individual procedure, subroutine, or function; or, depending on the programming paradigm, any other portion of software code that implements the function of the software module. A combination of hardware modules and software modules can occur, in particular, if some of the effects according to the invention are preferably exclusively implemented by special hardware (e.g., a processor in the form of an ASIC or FPGA) and some other part by software.

Description of Examples

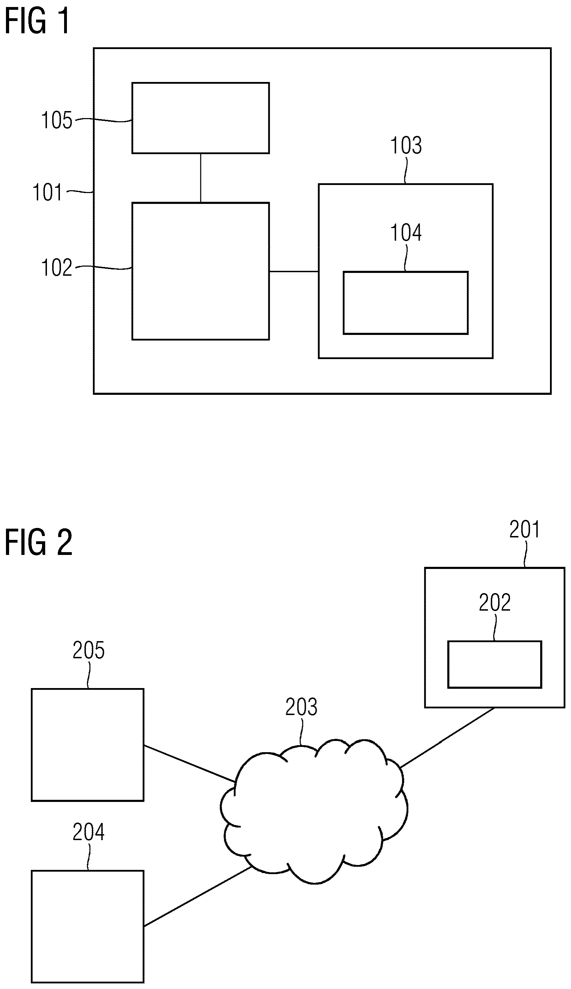

Fig. 1 shows one sample structure for computer-implementation of the invention which comprises:

(101) computer system
(102) processor
(103) memory
(104) computer program (product)
(105) user interface

In this embodiment of the invention the computer program 104 comprises program instructions for carrying out the invention. The computer program 104 is stored in the memory 103 which renders, among others, the memory 103 and/or its related computer system 101 a provisioning device for the computer program 104. The computer system 101 may carry out the invention by executing the program instructions of the computer program 104 by the processor 102. Results of invention may be presented on the user interface 105. Alternatively, they may be stored in the memory 103 or on another suitable means for storing data.

Fig. 2 shows another sample structure for computer-implementation of the invention which comprises:

(201) provisioning device
(202) computer program (product)
(203) computer network/Internet
(204) computer system
(205) mobile device/smartphone

In this embodiment the provisioning device 201 stores a computer program 202 which comprises program instructions for carrying out the invention. The provisioning device 201 provides the computer program 202 via a computer network/Internet 203. By way of example, a computer system 204 or a mobile device/smartphone 205 may load the computer program 202 and carry out the invention by executing the program instructions of the computer program 202.

In a variation of this embodiment, the provisioning device 201 is a computer-readable storage medium, for example a SD card, that stores the computer program 202 and is connected directly to the computer system 204 or the mobile device/smartphone 205 in order for it to load the computer program 202 and carry out the invention by executing the program instructions of the computer program 202.

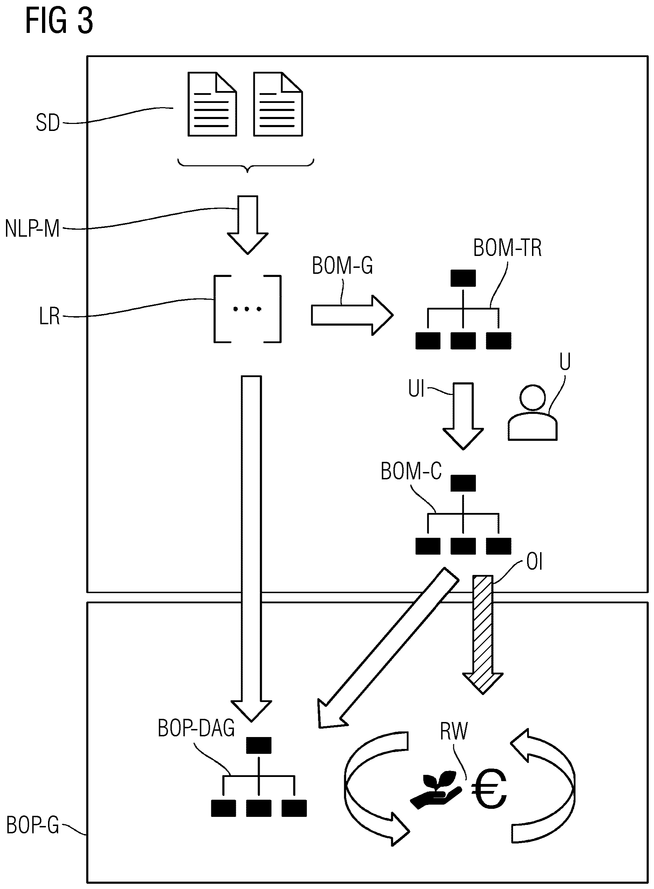

Preferably, the embodiments shown in Figs. 3 to 5 can be implemented with a structure as shown in Fig. 1 or Fig. 2.

Vaswani et al.: "Attention is all you need", arXiv:1706.03762v5 [cs.CL], available on the internet at https://doi.org/10.48550/arXiv.1706.03762 on March 21, 2023, discloses an encoder which is part of a transformer architecture, the latter being for example a pre-trained transformer model. The entire contents of that document are incorporated herein by reference.

Hochreiter et al.: "Long short-term memory.", Neural computation 9.8 (1997): 1735-1780, discloses a long short-term memory (LSTM) architecture. The entire contents of that document are incorporated herein by reference.

Zhu et al.: "A survey on deep graph generation: Methods and applications." arXiv preprint arXiv:2203.06714 (2022), discloses methods for deep graph generation. The entire contents of that document are incorporated herein by reference.

You et al. "Graph convolutional policy network for goal-directed molecular graph generation." Advances in neural information processing systems 31 (2018), discloses a graph convolutional policy network. The entire contents of that document are incorporated herein by reference.

The embodiments described in the following propose a semi-interactive approach for generating a bill of materials and a bill of processes for a given product based on a (unstructured or semi-structured) text document containing the product's feature specifications. The embodiments are data-driven (i.e., they can leverage a collection of previously specified BOMs, BOPs and the associated specification documents) and can optionally rely on existing purpose-built software for BOM/BOP definition as a means for evaluating the validity (and, optionally, additional KPIs) of the generated bill of materials and a bill of processes during training.

In the embodiments described in the following, a bill of materials of a given product is represented by a tree-like structure, where each (sub-)component of said product corresponds to a node in this tree. Nodes that are closer to the root node correspond to higher-level components made up of smaller subcomponents (their child nodes), which in turn may have their own subcomponents in the next (lower) level of the tree. In particular, the root represents the final product and the raw materials needed to produce this final product are given by the leaves.

In the embodiments described in the following, a bill of processes specifies the sequences of manufacturing steps required to produce a product. Similar to BOMs, BOPs can also be represented as a directed acyclic graph (DAG) where each operation is a node in the graph, and the edge directionality specifies the order in which the operations are executed. That means, the leave nodes correspond to the initial operations in the manufacturing process and the root node indicates the final operation required to complete the product.

Figure 3 shows an architecture that is used by the embodiments described in the following. At a very high level, a first embodiment can be seen as consisting of the following steps:

A natural language processing module NLP-M processes a document containing feature specifications of a product. The natural language processing module NLP-M condenses the content of the document into a latent representation LR, which is an embedding in latent space.

A bill of materials generator BOM-G receives the latent representation LR as input and generates a bill of materials BOM-TR, which is a tree-structure representation of a bill of materials corresponding to the document.

Since both the natural language processing module NLP-M and the bill of materials generator BOM-G introduce noise to the process, a user interface UI then allows a user U to examine the generated bill of materials BOM-TR and correct any mistakes at hand, which results in a curated bill of materials BOM-C. Optionally, the user interface UI employs a recommendation system to propose alternative components to the one that the user U is considering replacing, using one of the algorithms disclosed in US 2023/0273573 A1. The entire contents of US 2023/0273573 A1 are incorporated herein by reference.

The latent representation LR and the curated bill of materials BOM-C are then passed into a bill of processes generator BOP-G. The bill of processes generator BOP-G has been trained to construct a bill of processes that (a) corresponds to the product as specified in the document, (b) is valid, and (c) (optionally) maximizes a set of KPIs that correspond to ecological or economical goals (e.g., price of the product or its CO2 footprint).

In the following, the respective steps and modules will be described regarding various embodiments in more detail.

An embodiment consists of the following building blocks and aspects:

A set of documents SD contains as documents $D_1, D_2, \ldots, D_N$ product specifications, which can be semi-structured documents or free-form descriptions in natural language. The product specifications can also be requirements or include requirements.

A natural language processing module NLP-M,

$$f: D \rightarrow \mathbb{R}^d$$, is capable of mapping each document contained in the set of documents into a corresponding latent representation LR, which is an embedding of the respective document in d-dimensional latent space. For example, the natural language processing module NLP-M can be implemented using the encoder of a transformer or an LSTM as disclosed in the references cited above. If the documents in the set of documents SD adhere to a known structure, the natural language processing module NLP-M can include several corresponding pre-processing & feature engineering submodules. The natural language processing module NLP-M can be trained on a variety of tasks, including document completion. Depending on the documents in the set of documents SD, the natural language processing module NLP-M can also be a pretrained language model which may or may not be further finetuned.

In a fist variant, each document in the set of documents SD specifies an entire product and its subcomponents. In that case, the latent representation LR is created from a single document. In a second variant, the set of documents as a whole specifies a product and its subcomponents, possibly including requirements. In that case, the latent representation LR is created from the entire set of documents SD as will be described further below.

A bill of materials generator BOM-G, $g: \mathbb{R}^d \rightarrow \mathcal{T}$, takes the latent representation LR of a document as input and generates a bill of materials BOM-TR, which is a tree-structure representation of a bill of materials corresponding to the document. That means, $\mathcal{T}$ denotes the set of finite trees.

Each node in the generated bill of materials BOM-TR represents a particular (sub-) component of the product specified in the document. Each node possesses attributes that describe said (sub-)component on a technical level, such as material type, dimensions, etc. The values of these attributes can then be used by downstream blocks of the current embodiment as an additional implicit contextual information (e.g., the fact that a plate (sub-)component is made from high-carbon steel may necessitate using a specific drilling machine in a corresponding bill of processes entry).

Regarding the implementation of the bill of materials generator BOM-G, the current embodiment is agnostic when it comes to the choice of its generative model, as long as it is possible to condition the generation process on the context given by the latent representation LR. Possible choices for the generative model include auto-regressive, variational autoencoder, Normalizing Flows, Generative adversarial network (GAN), or diffusion-based models, as described in Zhu, Yanqiao, et al., "A survey on deep graph generation: Methods and applications.", arXiv preprint arXiv:2203.06714 (2022). The entire contents of that document are incorporated herein by reference.

A user interface UI allows a user U to modify the generated bill of materials BOM-TR to produce a curated bill of materials BOM-C.

A stochastic bill of processes generator BOP-G, $h: \mathbb{R}^d \times \mathcal{T} \rightarrow \mathcal{G}$, maps the latent representation LR of each document along with the curated bill of materials BOM-C to a bill of processes BOP-DAG, which is a directed acyclic graph (DAG) specifying a bill of processes (i.e., $\mathcal{G}$ denotes the set of finite DAGs) corresponding to the curated bill of materials BOM-C.

Regarding the implementation of the bill of processes generator BOP-G, the current embodiment solves the bill of processes generation problem via a reinforcement learning agent, such as a graph convolutional policy network (GCPCN) as described in You, Jiaxuan, et al. "Graph convolutional policy network for goal-directed molecular graph generation." Advances in neural information processing systems 31 (2018). The entire contents of that document are incorporated herein by reference.

In this setting, the task of the reinforcement learning agent is to iteratively construct the bill of processes BOP-DAG by adding nodes and edges specifying the required tasks and their dependencies.

Moreover, the current embodiment sets up an artificial environment that assigns a reward RWto the reinforcement learning agent based on validity of the generated bill of processes BOP-DAG and (optional) KPIs. The current embodiment uses purpose-built software for specifying BOPs to perform a soft validity check (and when receiving the curated bill of materials BOM-C as optional input OI, verifying the respective BOM/BOP pair against a set of rules that impose restrictions on applying certain manufacturing steps to components made of specific material types) and obtain the values of associated KPIs.

During training, the parameters of the reinforcement learning agent are trained to maximize the reward RW. During deployment, the reinforcement learning agent iteratively samples steps to be added to the bill of processes BOP-DAG from the trained policy until a stop operation is drawn. This procedure induces the random mapping $h$.

In a further embodiment, the set of documents SD contains documents that each specify only a part of a product. The set of documents SD as a whole represents the product for which a corresponding bill of materials and bill of processes should be provided. The exact workflow is then as follows:

First, the documents $D_1, D_2, ... , D_N$ contained in the set of documents SD are fed into the natural language processing module NLP-M to produce the embeddings $f(D_1), f(D_2), ... , f(D_N)$. Subsequently, the current embodiment applies a permutation invariant pooling operator $\Theta(f(D_1), f(D_2), ... , f(D_N)) =: x$ that aggregates the information from all embeddings into the latent representation LR shown in Fig. 3. Potential candidates for $\Theta$ are summation, averaging, or the max-pooling operator.

Second, the current embodiment feeds the latent representation LR, $x$, into the bill of materials generator BOM-G, $g$, to generate the bill of materials BOM-TR, $g(x) =: T$.

Third, the generated bill of materials BOM-TR, $T$, is output by a user interface UI. In case the generated bill of materials BOM-TR needs to be revised, the user interface UI detects user interactions of a user U producing a curated bill of materials BOM-C, $\bar{T}$, with the help of purpose-built software (e.g., TcPCM, Teamcenter Product Cost Management).

Fourth, the curated bill of materials BOM-C, $\bar{T}$, and the latent representation LR, x, are fed into the bill of processes generator BOP-G, $h$, which produces a bill of processes BOP-DAG, $G$, which is a graph-representation of the bill of processes corresponding to the curated bill of materials BOM-C.

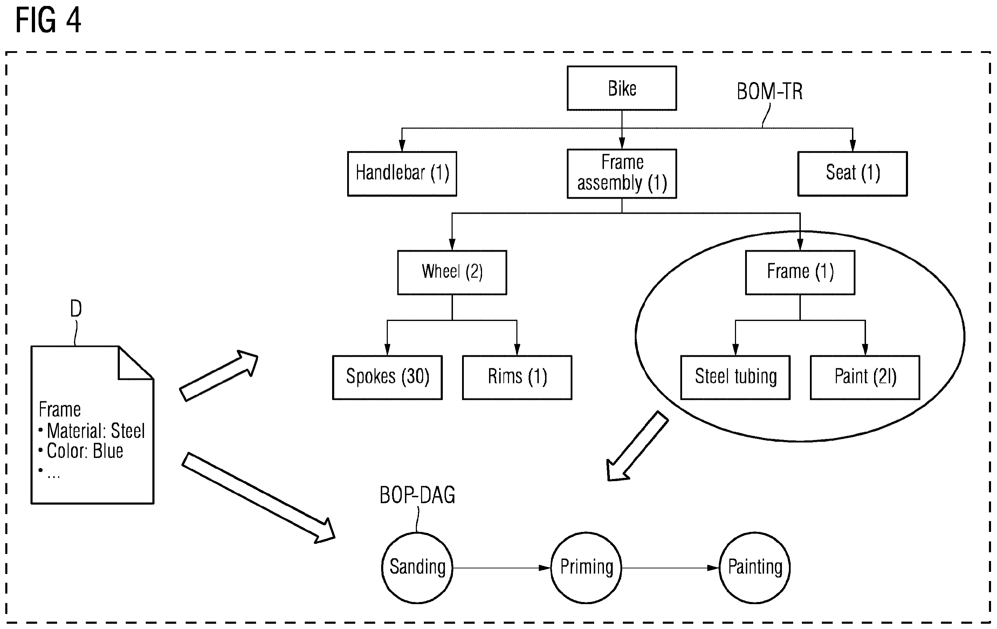

Figure 4 shows a simple example of a document D containing product specifications, a generated bill of materials BOM-TR corresponding to the document D and, for illustration only, an excerpt of a corresponding generated bill of processes BOP-DAG.

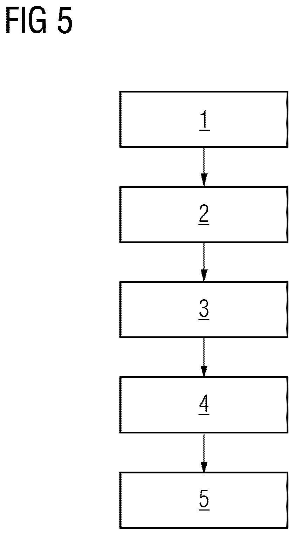

Fig. 5 shows a flowchart of a possible exemplary embodiment.

In a first operation (1) a natural language processing module maps at least one document specifying a product into a latent representation, which is an embedding in latent space.

In a second operation (2), a bill of materials generator receiving the latent representation as input generates a bill of materials for the product.

In a third operation (3), a user interface outputs the generated bill of materials.

In a fourth operation (4), the user interface detects user interactions with the generated bill of materials and creates a curated bill of materials depending on the user interactions.

In a fifth operation (5), a bill of processes generator receiving the latent representation and the curated bill of materials as input constructs a bill of processes for the product.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform acts corresponding with the operations of the method described above.

The instructions for implementing processes or methods described herein may be provided on computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code, and the like, operating alone or in combination. Likewise, processing strategies may include multiprocessing, multitasking, parallel processing, and the like.

The invention has been described in detail with reference to embodiments thereof and examples. Variations and modifications may, however, be effected within the spirit and scope of the invention covered by the claims. The phrase "A, B and/or C" as an alternative expression may provide that one or more of A, B and C may be used.

Independent of the grammatical term usage, individuals with male, female, or other gender identities are included within the term.

**Claims**

**1.** A computer implemented method for generating a bill of materials and a corresponding bill of processes for a product, wherein the following operations are performed by modules, and wherein the modules are hardware modules and/or software modules executed by one or more processors:

- mapping (1), by a natural language processing module (NLP-M), at least one document specifying a product into a latent representation (LR), which is an embedding in latent space,
- generating (2), by a bill of materials generator (BOM-G) receiving the latent representation (LR) as input, a bill of materials (BOM-TR) for the product,
- outputting (3), by a user interface (UI), the generated bill of materials (BOM-TR),
- detecting (4), by the user interface (UI), user interactions with the generated bill of materials (BOM-TR) and creating a curated bill of materials (BOM-C) depending on the user interactions, and
- constructing (5), by a bill of processes generator (BOP-G) receiving the latent representation (LR) and the curated bill of materials (BOM-C) as input, a bill of processes (BOP-DAG) for the product.

**2.** The method according to claim 1,

- wherein the bill of processes generator (BOP-G) has been trained to construct the bill of processes (BOP-DAG) maximizing one or more key performance indicators.

**3.** The method according to claim 2,

- with the additional operation of outputting the curated bill of materials (BOM-C), the bill of processes (BOP-DAG), and/or the at least one key performance indicator.

**3.** The method according to any of the preceding claims,

- wherein the at least one document is at least one semi-structured document or at least one free-form description in natural language.

**4.** The method according to any of the preceding claims,

- wherein the natural language processing module (NLP-M) contains the encoder of a transformer, a long short-term memory architecture, or a pretrained language model.

**5.** The method according to any of the preceding claims,

- wherein the generated bill of materials (BOM-TR), the curated bill of materials (BOM-C), and the bill of processes (BOP-DAG) are directed acyclic graphs.

**6.** The method according to claim 5,

- wherein the bill of processes generator (BOP-G) is a reinforcement learning agent, in particular a graph convolutional policy network, that iteratively constructs the bill of processes (BOP-DAG) by adding nodes and edges specifying required tasks and their dependencies.

**7.** The method according to claim 6,

- wherein the reinforcement learning agent has been trained with a reward (RW) based on a validity of the generated bill of processes (BOP-DAG) and the at least one key performance indicator.

**8.** A system for generating a bill of materials and a corresponding bill of processes for a product, with the following modules:

- a natural language processing module (NLP-M), configured for mapping (1) at least one document specifying a product into a latent representation (LR), which is an embedding in latent space,
- a bill of materials generator (BOM-G), configured for receiving the latent representation (LR) as input and generating (2) a bill of materials (BOM-TR) for the product,
- a user interface (UI), configured for outputting (3) the generated bill of materials (BOM-TR), detecting (4) user interactions with the generated bill of materials (BOM-TR), and creating a curated bill of materials (BOM-C) depending on the user interactions, and
- a bill of processes generator (BOP-G), configured for receiving the latent representation (LR) and the curated bill of materials (BOM-C) as input and constructing (5) a bill of processes (BOP-DAG) for the product.

**9.** A computer program product comprising instructions which, when the program is executed by a computer, cause the computer to carry out a method according to one of the method claims.

**10.** A provisioning device for the computer program product according to the preceding claim, wherein the provisioning device stores and/or provides the computer program product.

FIG 1

FIG 2

# FIG 3

SD

NLP-M

LR

BOM-G

BOM-TR

UI

U

BOM-C

OI

BOP-DAG

RW

BOP-G

# FIG 4

BOM-TR

- Bike
  - Handlebar (1)
  - Frame assembly (1)
    - Wheel (2)
      - Spokes (30)
      - Rims (1)
    - Frame (1)
      - Steel tubing
      - Paint (2l)
  - Seat (1)

D

Frame
- Material: Steel
- Color: Blue
- ...

BOP-DAG

Sanding → Priming → Painting

EP 4 703 998 A1

FIG 5

```
┌─────────────────┐
│        1        │
└─────────────────┘
         │
         ▼
┌─────────────────┐
│        2        │
└─────────────────┘
         │
         ▼
┌─────────────────┐
│        3        │
└─────────────────┘
         │
         ▼
┌─────────────────┐
│        4        │
└─────────────────┘
         │
         ▼
┌─────────────────┐
│        5        │
└─────────────────┘
```

EUROPEAN SEARCH REPORT

**Application Number**

EP 24 19 7696

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/132040 A1 (NAT UNIV SINGAPORE [SG]) 23 June 2022 (2022-06-23)<br>* page 1, line 5 - page 4, line 32 *<br>* page 7, line 6 - page 13, line 14 *<br>* page 15, line 12 - page 19, line 9 *<br>* figures 1-4 *<br>----- | 1-10 | INV.<br>G06Q10/0875<br>G06F40/00<br>G06N3/092 |
| X | "BOM Bot: Smart Executable Ontology Generation for the Creation of BOMs ED - Darl Kuhn",<br>IP.COM, IP.COM INC., WEST HENRIETTA, NY, US,<br>7 February 2022 (2022-02-07), XP013192515,<br>ISSN: 1533-0001<br>* pages 1-4 *<br>----- | 1-10 | |
| A | Anonymous: "Latent space - Wikipedia",<br>,<br>31 July 2024 (2024-07-31), XP093251628,<br>Retrieved from the Internet:<br>URL:https://en.wikipedia.org/w/index.php?title=Latent_space&oldid=1237812611<br>* the whole document *<br>----- | 1-10 | |
| A | Anonymous: "Word embedding - Wikipedia",<br>,<br>31 July 2024 (2024-07-31), XP093251875,<br>Retrieved from the Internet:<br>URL:https://en.wikipedia.org/w/index.php?title=Word_embedding&oldid=1237803423<br>* the whole document *<br>----- | 1-10 | |

**TECHNICAL FIELDS SEARCHED (IPC)**

G06Q
G06F
G06N

The present search report has been drawn up for all claims

| Place of search | Date of completion of the search | Examiner |
|---|---|---|
| Munich | 19 February 2025 | Aguilar, José María |

EPO FORM 1503 03.82 (P4C01)

## ANNEX TO THE EUROPEAN SEARCH REPORT
## ON EUROPEAN PATENT APPLICATION NO.

EP 24 19 7696

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2025

| Patent document cited in search report | Publication date | Patent family member(s) | Publication date |
|---|---|---|---|
| WO 2022132040 A1 | 23-06-2022 | NONE | |

EPO FORM P0459

For more details about this annex : see Official Journal of the European Patent Office, No. 12/82

**EP 4 703 998 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20230273573 A1

**Non-patent literature cited in the description**

- **VASWANI et al.** Attention is all you need. *arXiv:1706.03762v5*, 21 March 2023, https://doi.org/10.48550/arXiv.1706.03762
- **HOCHREITER et al.** Long short-term memory. *Neural computation*, 1997, vol. 9 (8), 1735-1780
- **ZHU et al.** A survey on deep graph generation: Methods and applications. *arXiv preprint arXiv:2203.06714*, 2022
- **YOU et al.** Graph convolutional policy network for goal-directed molecular graph generation. *Advances in neural information processing systems*, 2018, vol. 31
- **ZHU, YANQIAO et al.** A survey on deep graph generation: Methods and applications. *arXiv preprint arXiv:2203.06714*, 2022
- **YOU, JIAXUAN et al.** Graph convolutional policy network for goal-directed molecular graph generation. *Advances in neural information processing systems*, 2018, vol. 31